# EUROPEAN PATENT SPECIFICATION

(11) **EP 2 963 851 B1**
(45) Date of publication and mention of the grant of the patent: **09.05.2018**
(21) Application number: 14306091.1
(22) Date of filing: 03.07.2014
(51) Int. Cl.: H04J 14/02

(54) **A multidirectional optical apparatus**
Multidirektionale optische Vorrichtung
Appareil optique multidirectionnel

(43) Date of publication of application: 06.01.2016
(73) Proprietor: Alcatel Lucent, 91620 Nozay (FR)
(72) Inventor: Zami, Thierry, 91620 NOZAY (FR)
(74) Representative: Berthier, Karine

(56) References cited:
- EP-A1- 2 477 351
- US-A1- 2009 232 492
- US-A1- 2014 147 121
- MARTIN MATTHEWS ET AL: "Demonstration of a Novel Twin 10x10 WSS for Application in a Flexible Spectrum, Colorless and Directionless ROADM", ASIA COMMUNICATIONS AND PHOTONICS CONFERENCE 2013, 1 January 2013 (2013-01-01), - 15 November 2013 (2013-11-15), page AF4E.1, XP055157788, Washington, D.C. DOI: 10.1364/ACP.2013.AF4E.1 ISBN: 978-1-55-752989-3
- STEVEN GRINGERI ET AL: "Flexible architectures for optical transport nodes and networks", IEEE COMMUNICATIONS MAGAZINE, IEEE SERVICE CENTER, PISCATAWAY, US, vol. 48, no. 7, 1 July 2010 (2010-07-01), pages 40-50, XP011312222, ISSN: 0163-6804

## Description

### Field of the invention

The invention relates to the technical field of optical communication systems, in particular to network elements such as add devices, drop devices and transparent switching nodes for WDM networks.

### Background

Wavelength division multiplexing (WDM) transmission technology is a major factor in meeting the increasing needs of data transfer rates in the transmission of information. Wavelength switching nodes used in transparent WDM networks typically include devices known as reconfigurable optical add-drop multiplexers (ROADM) or optical cross-connects (OXC). In order to construct such devices, subsystems known as Wavelength Selective Switches (WSS) are particularly attractive. WSSs make it possible to create switching nodes having a very flexible configuration with a much simpler structure than when using discrete components, as well as a reduced size and high reliability.

Add and drop devices in WDM network elements refer to subsystems providing add and drop functions, i.e. a capability to make write-accesses and read-accesses to the WDM transport layer.

The degree of connectivity of an optical node refers to the number of its adjacent nodes. As an example, current contentionless technologies allow a maximum degree of connectivity of 8 for add or drop stages belonging to optical nodes.

"Transponders" is a generic word to recite receivers and/or transmitters. Documents EP2477351 A1, US2014/147121 A1 and "Demonstration of a Novel Twin 10x10 WSS for Application in a Flexible Spectrum, Colorless and Directionless ROADM", by M. Matthews et al. ASIA COMMUNICATIONS AND PHOTONICS CONFERENCE 2013, 1 January 2013 (2013-01-01), -15 November 2013 (2013-11-15), page AF4E.1, Washington, D.C. DOI: 10.1364/ACP.2013.AF4E.1 ISBN: 978-1-55-752989-3, and US2009/232492 A1, all disclose different implementations of multidirectional ROADM apparatuses.

### Summary

In an embodiment, the invention provides a multidirectional optical apparatus for a WDM optical network according to claims 1 and 7. Aspects of the disclosure stem for the observation that there is a need to increase the connectivity degree of the nodes in a transparent optical network.

Aspects of the disclosure stem for the observation that each optical receiver or optical transmitter are connected to several MIMO WSSs in parallel so that the union of all the sub sets of adjacent node served by each of these MIMO WSSs contains all the possible adjacent nodes of the add and/or drop device.

Aspects of the disclosure are based on the idea that the respective sub sets of adjacent nodes of the add and/or drop device related the respective MIMO WSSs interconnected to a given optical receiver or optical transmitter are disjoint.

Further aspects of the disclosure are based on the idea of providing a transparent multidirectional add and/or drop device that offers some or all of the following features:
- High add and/or drop capacity,
- High cascadability resulting from low impact on transit traffic,
- Colorless ports, i.e. ability to direct any wavelength from a given WDM port to a given receiver in the drop device or from a given transmitter in the add device to a given WDM port,
- Multidirectional ports, i.e. ability to direct signals from any adjacent node to a given port in the drop device or ability to direct signals from a given port in the add device to any adjacent node,
- Low contention or contentionless operations,
- Progressive scalability or suitability for pay-as-you grow deployment,
- High connectivity degree, e.g. higher than 8,
- Protection against component faults, e.g. for applications requiring a high level of reliability as submarine transmissions, by providing redundancy,
- Cost-efficiency,
- Low insertion losses at the drop inputs of the drop stage and at the add outputs of the add stage,
- Compact footprint.
- Providing a satisfactory compromise between low insertion loss and acceptable contention.

### Brief description of the drawings

These and other aspects of the invention will be apparent from and elucidated with reference to the embodiments described hereinafter, by way of example, with reference to the drawings.
Figure 1 is an exemplary functional representation of a multidirectional add and drop device of connectivity degree 6.
Figure 2 is an exemplary functional representation of an embodiment of a multiple-inputs multiple-outputs wavelength (MIMO) selective switch (WSS).
Figure 3 is an exemplary functional representation of a drop stage in an embodiment.
Figure 4 is an exemplary functional representation of a drop stage in another embodiment.
Figure 5 is an exemplary functional representation of an add stage in an embodiment.

### Detailed description of illustrative embodiments

In a transparent WDM optical network, transparent optical switching nodes are connected by optical links to form a given topology. The term "transparent" is applied to a transmission system, in which the signal remains optical without being converted into an electronic signal when passing through a network switching node. Transparency in optical communication networks is a characteristic that makes it possible to reduce the cost and power consumption of network equipment by eliminating optical-electrical-optical conversions, and therefore the corresponding transducers. Transparency can exist in some or all of the switching nodes of an optical network. Various architectures of transparent switching nodes for WDM networks are disclosed in "Flexible Architectures for Optical Transport nodes and Networks", S. Gringeri et al., IEEE Communications Magazine, July 2010, pp40-50.

A multidirectional add and drop device is used to switch, extract or to send optical WDM signals in an optical node of an optical network.

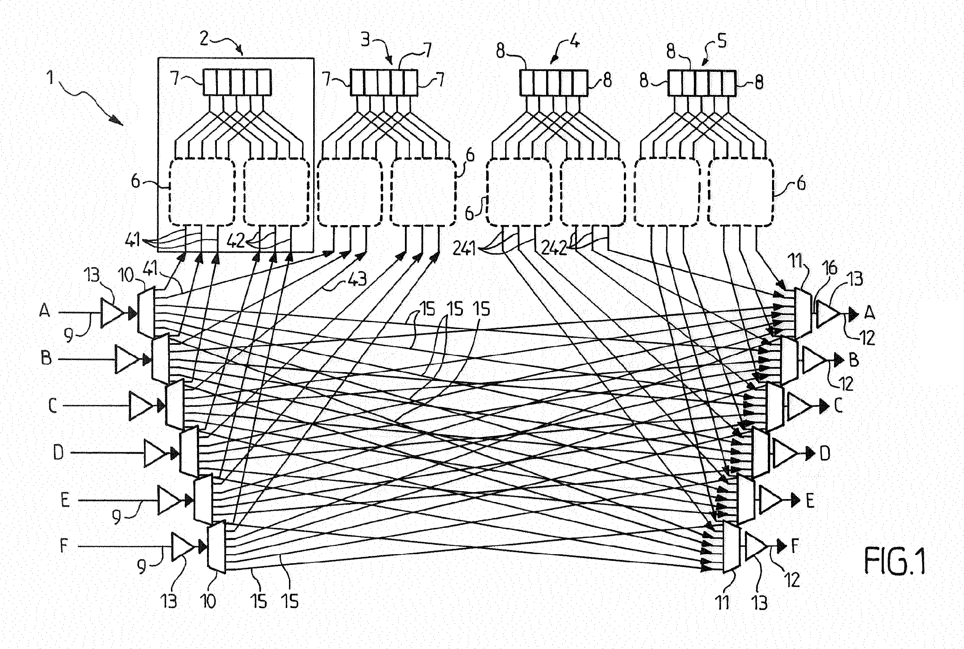

With reference to Figure 1, an example optical switching device 1 is represented. The device 1 comprises a plurality of WDM optical device inputs 9 for receiving the light from a plurality of adjacent nodes A, B, C, D, E and F and a plurality of WDM optical device outputs 12 for transmitting light to the plurality of adjacent nodes A to F. Optical links 15 are provided to connect each node of the plurality of adjacent nodes A to F to the other nodes of the plurality. This part of the multidirectional optical switching device 1 comprising the optical links 15 is called the transit part.

The optical switching device 1 further comprises a multidirectional drop stage 2 in order to extract some WDM optical signals from the traffic arriving from the adjacent nodes A, B, C, D, E and F, and a multidirectional add stage 4 in order to generate some WDM optical signals to insert traffic to transmit to the adjacent nodes.

As an option, a second drop stage 3 and a second add stage 5 can be provisioned in order to provide increased capacity and redundancy. In embodiments, any further add or drop stages can be further provisioned.

The incoming WDM optical signal arriving from one of the nodes A, B, C, D, E and F first passes through the device input 9 then passes through an amplifier 13 and then through an input wavelength selective switch WSS 10 that breaks down or distributes the wavelength channels composing the WDM optical signal through a plurality of optical drop links 41 or 42 and transit links 15. The optical links 41, 42 and 15 can be for example optical fibers or integrated waveguides.

The plurality of transit links 15 links the input WSS 10 associated to one of the adjacent nodes A, B, C, D, E and F to a plurality of output WSSs 11, that are connected to the other adjacent nodes. For example, the output WSS 11 associated to node F may combine the incoming optical signals arriving from node A with incoming optical signals arriving from node B into a common WSS output port 16. This output port 16 transmits the WDM optical signals to an amplifier 13 to further transmit the WDM optical signals to adjacent node F through the device output 12. Each output WSS 11 of the plurality of output WSSs 11 is linked to an adjacent node of the plurality of adjacent nodes A to F and is able to receive WDM optical signals from all other nodes of the plurality of adjacent nodes A, B, C, D, E and F.

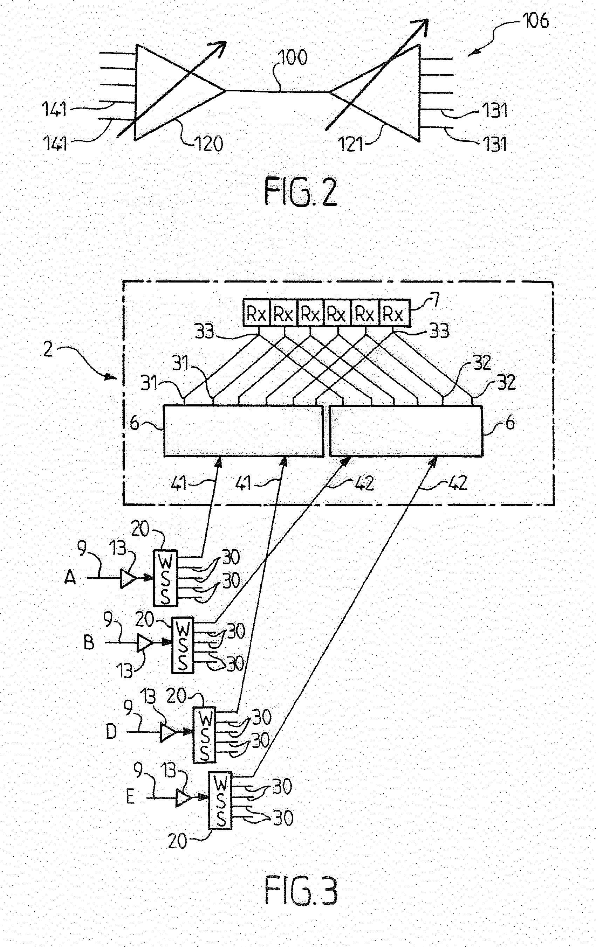

The drop link 41 or the drop link 42 links the input WSS 10 associated to a node from the plurality of nodes A, B, C, D, E and F to a drop stage 2. The drop stage 2 is able to demodulate any wavelength channel arriving from any of the plurality of nodes A, B, C, D, E and F thanks to receivers 7. The drop stage 2 includes two MIMO WSSs 6, as it will be later described with reference to figure 3.

The optical receivers 7 may be implemented as quadratic receivers or as coherent receivers. To provide wavelength tuning, the quadratic receivers may be equipped with tunable filters. In coherent receivers, wavelength tuning can be achieved by setting the local oscillator.

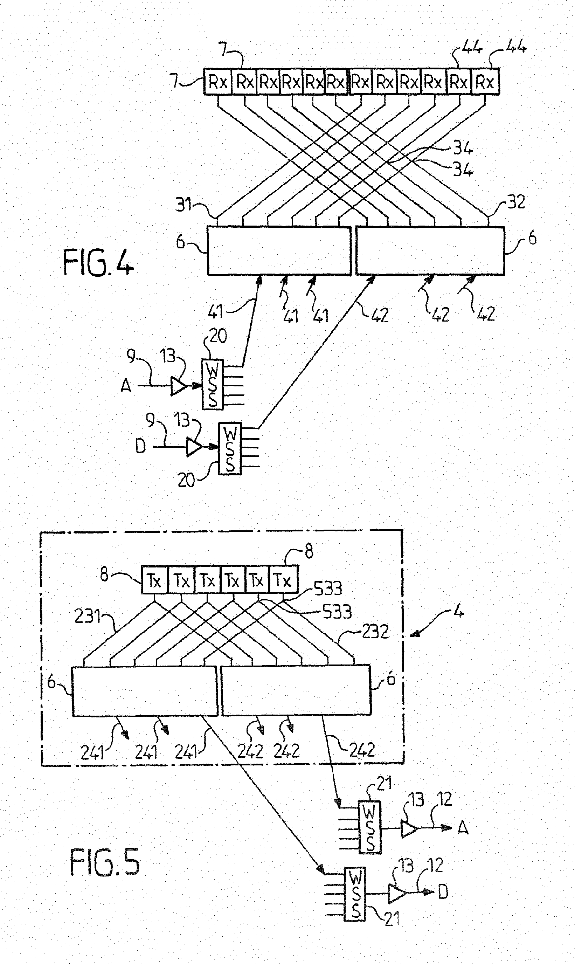

An output WSS 11 associated to an adjacent node comprises an add input linked to an optical link 241 or 242 coming from the add stage 4. The add stage 4 is able to generate and modulate a plurality of wavelength channels and to transmit them to the plurality of nodes A to F thanks to transmitters 8. The add stage 4 includes two MIMO WSSs 6, as it will be later described with reference to figure 5.

The optical transmitters 8 may be implemented as fixed-wavelength or tunable-wavelength transmitters.

In a modified embodiment, either the WSSs 10 or the WSSs 11 are replaced by optical splitters or combiners.

A wavelength selective switch used in the device refers to a device that may be used as a reconfigurable multiplexer or a reconfigurable demultiplexer. A nonlimiting description of such a WSS is provided below.

When it is acting as a multiplexer, as WSSs 11 are, a plurality of selectable ports serve as WSS input ports, and a common port serves as a WSS output port. The wavelength selective switch comprises grating components capable of separating a WDM optical signal received at a WSS input port into a plurality of beams corresponding to predefined non-overlapping spectral bands, and light steering means capable of steering independently the optical beam corresponding to a respective spectral band either towards the WSS output port or towards an absorber. Thereby, the spectral component of the incoming WDM signal belonging to a spectral band can be switched as a whole, i.e. either passed to the common WSS output port or blocked. The same function is achieved for each spectral band at each WSS input port.

This WSS 11 thereby carries out a reconfigurable multiplexing function on spectral bands whose optical frequencies are aligned with one or more predetermined frequency grids. It makes it possible to pass, from each WSS input port to the common WSS output port, one spectral band, multiple spectral bands, or no spectral band, selected from among the signals received at the respective WSS input port.

The switching or steering of beams within the WSS 11 is produced by spatial light manipulation elements, such as micromirrors activated by micro electromechanical systems (MEMS) micro-actuators or liquid crystal cells. In addition to selecting the spectral bands, these elements may be capable of adjusting the signal attenuation for each spectral band. In this manner, each WSS 11 serves to both select the spectral bands that must be passed to a given WSS output port 16 and to adjust their output power band-by-band towards the corresponding WSS output port 16.

Similarly, when it is acting as a demultiplexer, as WSS 10 are, a common port serves as a WSS input port and a plurality of selectable ports serve as WSS output ports.

The width of the spectral bands switched by the WSSs 10 and 11 depends on the design of the WSSs. Preferably, this width is selected to match a single wavelength channel of a standard ITU grid. Alternatively, this width is selected as a multiple of a standard ITU channel spacing. Some advanced WSSs can also provide an adaptable filtering function with adjustable spectral width. This feature makes it possible to implement flexible optical frequency grids in the WDM network, i.e. so-called gridless signals. For the sake of clarity, the filter width of the WSSs 10 and 11 corresponds to a single wavelength channel of a standard ITU grid in the following non limitative example.

As it was previously described, each of the drop stages 2, 3 and the add stages 4, 5 comprises at least MIMO WSS 6. A MIMO WSS comprises a plurality of WSS input ports and a plurality of WSS output ports. A MIMO WSS is a filter able to filter both in the spatial and in the spectral domain and to steer a wavelength channel from any one of the optical signals of any one of the WSS input ports into any one of the WSS output ports, in a controlled, selective and configurable manner.

With reference to figure 2, an embodiment of a MIMO WSS is represented, in which the MIMO WSS 106 comprises a first reconfigurable WSS 120 acting as a multiplexer and a second reconfigurable WSS 121 acting as a demultiplexer. The first WSS 120 multiplexes the wavelength channels from a plurality of WSS input ports into a common optical line 100 and the second WSS demultiplexes the resulting WDM optical signal from this common optical line 100 into a plurality of WSS output ports 131. With this configuration, a specific optical signal carried by a specific wavelength channel can be steered from any one of the WSS input ports to any one of the WSS output ports. In this configuration, when one of the WSS input ports 141 transmits an optical signal on a specific wavelength channel, then this specific wavelength channel is not available for the other WSS input ports of the plurality of WSS input ports 141 because of contention consideration.

In another embodiment, the MIMO WSSs 6 used in the optical switching device 1 is fabricated with another technology as described in the following paper:
- Demonstration of a Novel Twin 10x10 WSS for Application in a Flexible Spectrum, Colorless and Directionless ROADM, Martin Matthews and al. in ACP/IPOC 2013. In this embodiment, the total insertion losses of the MIMO WSSs 6 are twice lower as in the embodiment of a MIMO WSS as previously described with reference to figure 2. In this embodiment, the MIMO WSSs 6 is not contentionless.

In a preferred embodiment, the MIMO WSSs 6 used in the optical switching device 1 is fabricated with another technology, that is contentionless, as described in the following paper:
- LCOS-based matrix switching for 2x4 WSS for fully flexible channel selection Ting Han and al. in Photonics in Switching (PS), 2012 International Conference on 11-14 Sept. 2012.

In this preferred embodiment, with the technology above described, a plurality of instances of each wavelength channel of the frequency grid can be steered from the plurality of a MIMO WSS input ports to the plurality of a MIMO WSS output ports. The total insertion losses of a MIMO WSS according to this embodiment are equal to the insertion losses of a single-input multiple output WSS. Hence, the total insertion losses of this embodiment of a MIMO WSS are twice lower as the embodiment of a MIMO WSS as previously described with reference to figure 2. This property is due to the fact that such a MIMO WSS is integrated, compared to the embodiment of a MIMO WSS as described with reference to figure 2. One of the advantages of using a MIMO WSS in an add or a drop stage is that its insertion losses are low. For example a MIMO WSS with 8 ports on the transit part side and 12 ports on the transponder side has currently only 8dB to 9dB of insertion losses. Hence, the total number of amplifiers in the optical switching device 1 can be reduced and power can be saved.

The principle of operation of such MIMO WSSs 6 is based on the use of two active beam steering, or at least a single active beam steering used as two independent active beam steering. For example, an active beam steering can be chosen in the following list: liquid crystal on silicon (LCoS), programmable phase grating, microlens array, MEMs, diffractive element, etc. For example, a diffractive element is a programmable digital hologram displayed on a spatial light modulator to amplitude levels or phase modulation. For example, a LCoS comprises a spatial phase modulator using a CMOS address circuit that directly controls the voltage to the liquid crystal to achieve high-precision phase modulation characteristics. For example, a LCoS comprises 1280x768 pixels driven by an analogue phase drive. Hence, each WDM output of the first MIMO WSS is adapted to pass a respective set of optical signals selected, as a function of a configuration state and wavelength channels, among the pluralities of optical signals received by the plurality of WDM inputs of the first MIMO WSS. For example, this configuration state is implemented thanks to a CMOS address circuit that directly controls the voltage.

The configuration state of such a MIMO WSS 6 is driven as follow: the control plane determines which wavelength channel of the incoming WDM optical signal arriving from one of the nodes A, B, C, D, E and F has to be detected and passed to a chosen receiver. If an optical signal on a wavelength channel arrives at the input of the WSS 10 and is supposed to be detected, then the WSS 10 routes it from the input of the WSS 10 to a selected output of the WSS 10 linked to a selected MIMO WSS input port. Then, the MIMO WSS 6 routes it to the chosen MIMO WSS output port linked to the chosen receiver that is supposed to demodulate the optical signal.
The same principle applies for the MIMO WSSs 6 receiving a WDM signal from the transmitters.

The driving commands of the MIMO WSS are the identification of the band of optical frequencies for which a path should be established between an input port and an output port, by means of two optical frequencies defining the band of optical frequencies and port identifiers identifying the corresponding pair of input port and output port.

If the WSS is not contentionless, the new band of optical frequencies should be totally disjoint from any of the band of optical frequencies already passed by the WSS, otherwise, the new setting command may conflict with a previous command because of partial spectral overlapping.

With reference to figure 3, an embodiment of a drop stage 2 and its relation with some of the device inputs 9 is represented. This drop stage 2 comprises two MIMO WSSs 6, each having a plurality of WSS input ports 41, 42 and a plurality of output ports 31, 32.

For the sake of clarity, only two adjacent nodes A, B, D and E per MIMO WSS 6 are represented, but any number of interconnected adjacent nodes may be considered as soon as the optical switching device 1 implementation takes into account the dimensioning constraints as will be explained below, hence considering the following parameters that are: the insertion losses, the available number of MIMO WSS input ports N, the available number of MIMO WSS output ports M etc.

A subset of the plurality of adjacent nodes A, B is linked to the first MIMO WSS 6 via a respective WSS output port 41 of each WSS 20 connected to the subset of the plurality of adjacent nodes A, B. Similarly, a second subset of the plurality of adjacent nodes D, E is linked to the second MIMO WSS 6 via a WSS output port 42 of each WSS 20 of the second subset of the plurality of adjacent nodes D, E.

Each output port 31 of the first MIMO WSS 6 is combined with a unique output port 32 of the second MIMO WSS 6 via a coupler 33 that is able to combine the incoming WDM optical signals from the first and the second MIMO WSS 6 and input the combined signal into a receiver 7 within a plurality of receivers 7. In this embodiment using a 2x1 coupler 33, the first MIMO WSS 6 and the second MIMO WSS 6 do never simultaneously transmit a signal to a same receiver 7. When one of the MIMO WSSs 6, say the first MIMO WSS 6, transmits a signal to a receiver 7, then the other MIMO WSS 6, say the second MIMO WSS 6, is in a blocking state for the MIMO WSS output 32 linked to the same receiver 7. Hence, the 2x1 coupler 33 does not combine incoming optical signals but only links a single receiver 7 to two outputs of two MIMO WSS in parallel configuration.

In an embodiment, the other WSS output ports 30 are linked to a second plurality of WSSs acting as reconfigurable multiplexers through transit lines 15 in order to further transmit the incoming WDM optical signals arriving from the adjacent nodes A, B, D and E.

In an embodiment, one or more similar drop stages could end a branch of the optical network. In this configuration, each of the WSS 20 output ports 42, 30 of each of the WSS 20 of the plurality of input WSS 20 is linked to a MIMO WSS of a drop stage 2. This configuration can be useful for receiving a signal without emitting, as for example for broadcast applications as TV, radio etc.

With reference to figure 4, another embodiment of a drop stage and its relation with some of the device inputs 9 is represented. This drop stage 2 comprises two MIMO WSSs 6, each having a plurality of WSS input ports 41, 42 and a plurality of output ports 31, 32.

For the sake of clarity, only two adjacent nodes A and D are represented, but other WSS input ports 41, 42 are represented to show the links with other input WSS 20.

The operating principles of this drop stage is similar to that of the drop stage 2 above described with reference to figure 3. However, each MIMO WSS output port 31 of the first MIMO WSS 6 is combined with a unique MIMO WSS output port 32 of the second MIMO WSS 6 via a 2x2 coupler 34 instead of the 2x1 coupler 33 used in the embodiment described with reference to figure 3. In this configuration, twice as many receivers as in the embodiment described with reference to figure 3 are connectable to the first and second MIMO WSSs 6 in order to increase the drop capacity. This embodiment is advantageous because a 2x2 coupler generally has the same insertion losses as a 2x1 coupler 33. Therefore, the general power budget of the device 1 will not be impacted compared to the embodiment described with reference to figure 3 whereas drop capacity is increased.

For example, an incoming optical signal on a wavelength channel arrives from an adjacent node, say A, through the WDM device input 9. The optical signal is amplified by the amplifier 13 and then input into the configurable WSS 20. The WSS steers the optical signal to the specific WSS output 41, in order to send the signal to a receiver 7. The optical signal is input into a MIMO WSS 6 linked to the WSS output 41. The MIMO WSS 6 then steers the optical signal to a 2x2 coupler 34 that splits the signal into two similar signals, each being sent to a receiver 7 in order that at least one of the two receivers 7 be able to demodulate the signal. Of course, it is sufficient that the signal be demodulated by one receiver 7, while the other may just be ignored by the second receiver 44. This configuration is advantageous as the two receivers 7, 44 linked to the same 2x2 coupler 34 serve to receive two different wavelength channels. Hence, the two receivers 7, 44 are able to demodulate two combined signals on two different wavelength channels simultaneously transmitted through the 2x2 coupler 34. Hence, this configuration allows to double the drop capacity, while slightly raising the contention in the 2x2 couplers 34.-

As to dimensioning of the MIMO WSSs 6 used in the optical switching device 1, the following considerations can be taken into account. Firstly, the network is dimensioned in order to satisfy the client demands. A client demand is referred as a transmission capacity from a node to another node. This capacity is linked to the number of available wavelength channels, and will also impact the number of receivers needed in the drop stages 2 to demodulate the signals. The total number of optical receivers to be provided in the optical node is denoted by R. For example, R=20. Secondly, the node is connected to a given number, denoted by Q, of adjacent nodes. For example, Q= 16.

The drop stage 2 in the node 1 is multidirectional since any one of its receivers 7 is able to demodulate an optical signal on a dedicated wavelength channel coming from any of the Q adjacent nodes.

The add stage 5 is multidirectional because any one of the transmitters 8 is able to generate and modulate an optical signal on a dedicated wavelength channel for transmitting it to any of the Q adjacent nodes.

In addition to these constraints, the MIMO WSS 6 is, for example, technologically limited for its number of inputs and outputs. The number of MIMO WSS inputs, denoted by q, added to the number of MIMO WSS outputs, denoted by r, should not be higher than a certain number. This number originates from the implementation of the reconfigurable NxM WSS and may evolve as the technology matures. For example, in currently available products, this number may be equal to 21. For example, q=8 and r=12 are convenient values for respecting the condition that q+r<21.

Taking these considerations in mind, a solution to interconnect each of the Q adjacent nodes to each of the R receivers is to
- provide in each drop stage 2 Q/q MIMO WSS rounded up to the next higher positive integer,
- provide the number of drop stages 2 needed, that is R/r rounded up to the next higher positive integer, e.g. 2 for R=20 and r=12.

For the sake of illustration, a MIMO WSS is built with a number of MIMO WSS input ports equal to q and a number of MIMO WSS output ports equal to r with q+r<21. For example, q=8 and r=12. Preferably, the higher number of ports, in this example, r, are put on the transponder side.

The combination of two MIMO WSSs per drop stage 2 as shown on figure 3 allows a high connectivity degree, e.g higher than 8, by providing enough WSS input ports for all 16 adjacent nodes, i.e. 8 input ports per MIMO WSS 6.

By contrast, a drop stage using a single MIMO WSS would be able to connect to only half that number of adjacent nodes.

Hence, the combination of two MIMO WSSs per add or drop stage allows to achieve an interconnection to a high degree of connectivity, e.g. 16 while limiting insertion losses and therefore amplification requirements.

Such pair of linked MIMO WSSs is not fully contentionless because of the couplers in the drop stages 2, but the control plane can anticipate the contention, that remains low. Hence, this combination of two MIMO WSSs is a good compromise between a low contention and a high connectivity.

With reference to figure 5, an embodiment of an add stage 4 and its relation with some of the device outputs 12 is represented. The operating principle is similar to a reverse operating of the drop stage 2 above described with reference to figure 3, by replacing the receivers by transmitters able to generate the WDM optical signals and reversing the position of the different components. The add stage 4 comprises a plurality of transmitters 8, each transmitter being connected to a splitter 533 that shares a generated WDM signal into two MIMO WSS inputs 231, 232, the MIMO WSS inputs 231 and 232 being respectively connected to two different MIMO WSSs 6. The first MIMO WSS 6 is linked to a first plurality of adjacent nodes A via a first plurality of output WSSs 21 and the second MIMO WSS 6 is linked to a plurality of adjacent nodes D via a second plurality of output WSS 21.

In another embodiment of an add stage, not represented, the general operating is similar to a reverse operating of the drop stage above described with reference to figure 4, by replacing the receivers by transmitters able to generate the WDM optical signals and reversing the position of the different components. Compared to figure 5, the number of transmitters 8 is doubled by using 2x2 couplers 34 in the same way as in figure 4.

In embodiments, the input WSS 10 of the optical switching device 1 can be replaced by a splitter or a demultiplexer. In embodiments, the output WSS 11 of the optical switching device 1 can be replaced by a combiner or a multiplexer. However, to switch transit traffic, WSSs are preferably employed either at the inputs or at the outputs of the optical switching device 1. However, if the node is to be used for switching transit traffic, at least one wavelength blocking device must be employed either at the inputs or at the outputs of the optical switching device 1. Such wavelength blocking device may be implemented as a WSS or as a Wavelength Blocker.

The invention is not limited to the described embodiments. The invention is solely defined by the appended claims. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A multidirectional optical apparatus for a WDM optical network (1), the multidirectional optical apparatus comprising:
a first multiple-inputs multiple-outputs wavelength selective switch (6), the first MIMO WSS comprising a plurality of WDM inputs (41), each WDM input for receiving a plurality of optical signals carried on a plurality of wavelength channels, the first MIMO WSS comprising a plurality of WDM outputs, wherein, for a WDM output, the first MIMO WSS is adapted to select a respective set of optical signals, as a function of a configuration state and wavelength channels, among the pluralities of optical signals received by the plurality of WDM inputs of the first MIMO WSS, and to pass the selected set of optical signals to the WDM output,
a second multiple-inputs multiple-outputs wavelength selective switch, the second MIMO WSS comprising a plurality of WDM inputs (42), each WDM input for receiving a plurality of optical signals carried on a plurality of wavelength channels, the second MIMO WSS comprising a plurality of WDM outputs, wherein, for a WDM output, the second MIMO WSS is adapted to select a respective set of optical signals, as a function of a configuration state and wavelength channels, among the pluralities of optical signals received by the plurality of WDM inputs of the second MIMO WSS, and to pass the selected set of optical signals to the WDM output,
a plurality of optical receivers (7) for demodulating optical signals, and a plurality of optical couplers (33), each optical coupler having a first coupler input connected to a respective one of the WDM outputs (31) of the first MIMO WSS and a second coupler input connected to a respective one of the WDM outputs (32) of the second MIMO WSS and a coupler output connected to a respective one of the optical receivers (7), a plurality of distributing components (10), each distributing component having an input for receiving a WDM input signal comprising a plurality of optical signals carried on a plurality of wavelength channels, a transit output and a drop output,
wherein the distributing component is configured to pass the optical signals of the WDM input signal to the transit output and to the drop output in a selective or non-selective manner,
wherein, for a first subset of the distributing components, the drop output is connected to a respective one of the WDM inputs (41) of the first MIMO WSS and wherein the distributing components of the first subset are not connected to the second MIMO WSS, and for a second subset of the distributing components, the drop output is connected to a respective one of the WDM inputs (42) of the second MIMO WSS, wherein the distributing components of the second subset are not connected to the first MIMO WSS.

2. A multidirectional optical apparatus in accordance with claim 1, wherein the distributing component comprises a non-filtering optical splitter.

3. A multidirectional optical apparatus in accordance with claim 1, wherein the distributing component comprises a wavelength selective switch configured to pass a first subset of the optical signals of the WDM input signal to the transit output and to pass a second subset of the optical signals of the WDM input signal to the drop output, wherein the first and second subsets are selected as a function of wavelength channels.

4. A multidirectional optical apparatus in accordance with any one of claims 1 to 3, wherein each distributing component further comprises a second drop output,
wherein, for a third subset of the distributing components, the second drop output is connected to a respective one of the WDM inputs of a third MIMO WSS and, for a fourth subset of the distributing components, the second drop output is connected to a respective one of the WDM inputs of a fourth MIMO WSS, wherein the third MIMO WSS comprises a plurality of WDM outputs, wherein, for a WDM output, the third MIMO WSS is adapted to select a respective set of optical signals, as a function of a configuration state and wavelength channels, among the pluralities of optical signals received by the plurality of WDM inputs of the third MIMO WSS, and to pass the selected set of optical signals to the WDM output,
wherein the fourth MIMO WSS comprises a plurality of WDM outputs, wherein for a WDM output, the fourth MIMO WSS is adapted to select a respective set of optical signals, as a function of a configuration state and wavelength channels, among the pluralities of optical signals received by the plurality of WDM inputs of the fourth MIMO WSS, and to pass the selected set of optical signals to the WDM output,
the optical apparatus further comprising:
a second plurality of optical receivers for demodulating optical signals, and
a second plurality of optical couplers, each optical coupler of the second plurality having a first coupler input connected to a respective one of the WDM outputs of the third MIMO WSS and a second coupler input connected to a respective one of the WDM outputs of the fourth MIMO WSS and a coupler output connected to a respective one of the optical receivers of the second plurality.

5. A multidirectional optical apparatus in accordance with any one of claims 1 to 4, comprising a further optical receiver for demodulating optical signals, wherein an optical coupler further comprises a second coupler output connected to the further optical receiver.

6. A multidirectional optical apparatus in accordance with any one of claims 1 to 5, wherein at least one MIMO WSS is further adapted for each wavelength channel, to pass a first optical signal carried on the wavelength channel from a first WDM input to a first WDM output and a second optical signal carried on the wavelength channel from a second WDM input to a second WDM output.

7. A multidirectional optical apparatus for a WDM optical network (1), the multidirectional optical apparatus comprising:
a plurality of optical transmitters (8) for generating a plurality of optical signals carried on a plurality of wavelength channels, a first multiple-inputs multiple-outputs wavelength selective switch (6), the first MIMO WSS comprising a plurality of WDM outputs (241) and a plurality of WDM inputs, a second multiple-inputs multiple-outputs wavelength selective switch, the second MIMO WSS comprising a plurality of WDM outputs (242) and a plurality of WDM inputs,
and a plurality of optical couplers (533), each optical coupler having a first coupler output connected to a respective one of the WDM inputs of the first MIMO WSS and a second coupler output connected to a respective one of the WDM inputs of the second MIMO WSS and a coupler input connected to a respective one of the optical transmitters (8), wherein, for a WDM output, the first MIMO WSS is adapted to select a respective set of the plurality of optical signals, as a function of a configuration state and wavelength channels, among the pluralities of optical signals received by the plurality of WDM inputs of the first MIMO WSS, and to pass the selected set of optical signals to the WDM output, each WDM output for passing the respective set of the optical signals carried on the plurality of wavelength channels, and
wherein, for a WDM output, the second MIMO WSS is adapted to select a respective set of the plurality of optical signals, as a function of a configuration state and wavelength channels, among the pluralities of optical signals received by the plurality of WDM inputs of the second MIMO WSS, and to pass the selected set of optical signals to the WDM output, each WDM output for passing the respective set of the optical signals carried on the plurality of wavelength channels, a plurality of merging components (11), each having an add input, a transit input and a merging output (16), wherein, for a first subset of the merging components, the add input is connected to a respective one of the WDM outputs of the first MIMO WSS and wherin the merging components of the first subset are not connected to the second MIMO WSS, for a second subset of the merging components, the add input is connected to a respective one of the WDM outputs of the second MIMO WSS, wherein the merging components of the second subset are not connected to the first MIMO WSS, the respective merging output of each merging component for passing a WDM output signal wherein the merging component is configured to obtain the WDM output signal by merging optical signals received from the add input and from the transit input of the merging component in a selective or non-selective manner.

8. A multidirectional optical apparatus in accordance with claim 7, wherein the merging component comprises a non-filtering optical combiner.

9. A multidirectional optical apparatus in accordance with claim 8, wherein the merging component comprises a wavelength selective switch configured to pass to the merging output a first subset of the optical signals from the transit input and to pass a second subset of the optical signals from the add input, wherein the first and second subsets are selected as a function of wavelength channels.

10. A multidirectional optical apparatus in accordance with any one of claims 7-9, wherein each merging component further comprises a second add input, the optical apparatus further comprising:
a second plurality of optical transmitters for generating a second plurality of optical signals carried on wavelength channels, and
a third MIMO WSS comprising a plurality of WDM outputs and a plurality of WDM inputs, and a fourth MIMO WSS comprising a plurality of WDM outputs and a plurality of WDM inputs,
a second plurality of optical couplers, each optical coupler of the second plurality having a coupler input connected to a respective one of the optical transmitters of the second plurality of transmitters, a first coupler output connected to a respective one of the WDM inputs of the third MIMO WSS and a second coupler output connected to a respective one of the WDM inputs of the fourth MIMO WSS,
wherein, for a third subset of the merging components, the second add input is connected to a respective one of the WDM outputs of the third MIMO WSS and, for a fourth subset of the merging components, the second add input is connected to a respective one of the WDM outputs of the fourth MIMO WSS,
wherein, for a WDM output, the third MIMO WSS is adapted to select a respective set of the second plurality of optical signals, as a function of a configuration state and wavelength channels, among the pluralities of generated optical signals received by the plurality of WDM inputs of the third MIMO WSS, and to pass the selected set of optical signals to the WDM output, wherein, for a WDM output, the fourth MIMO WSS is adapted to select a respective set of the second plurality of optical signals, as a function of a configuration state and wavelength channels, among the pluralities of generated optical signals received by the plurality of WDM inputs of the fourth MIMO WSS, wherein, and to pass the selected set of optical signals to the WDM output.

11. A multidirectional optical apparatus in accordance with any one of claims 7 to 10, comprising a further optical transmitter for generating optical signals, wherein an optical coupler further comprises a second coupler input connected to the further optical transmitter.

12. A multidirectional optical apparatus in accordance with any one of claims 7 to 11, wherein at least one MIMO WSS is further adapted for each wavelength channel, to pass a first optical signal carried on the wavelength channel from a first WDM input to a first WDM output and a second optical signal carried on the wavelength channel from a second WDM input to a second WDM output.

13. An optical switching device comprising a multidirectional optical apparatus in accordance with one of claims 1 to 6 and a multidirectional optical apparatus in accordance with one of claims 7 to 12, the two optical apparatuses further comprising a plurality of transit links, each transit link connecting a transit output of one of the distributing components comprised in the multidirectional optical apparatus to a transit input of one of the merging components comprised in the multidirectional optical apparatus.

## Patentansprüche

1. Multidirektionale optische Vorrichtung für ein optisches WDM-Netzwerk (1), wobei die multidirektionale Vorrichtung umfasst:
einen ersten wellenlängenselektiven Mehreingangs-/Mehrausgangs-Schalter (6), wobei der erste MIMO WSS umfasst eine Vielzahl von WDM-Eingängen (41), jeder WDM-Eingang zum Empfangen einer Vielzahl von optischen Signalen, die auf einer Vielzahl von Wellenlängenkanälen befördert werden, wobei der erste MIMO WSS umfasst eine Vielzahl von WDM-Ausgängen, wobei, für einen WDM-Ausgang, der erste MIMO WSS ausgelegt ist zum Auswählen eines entsprechenden Satzes von optischen Signalen, als eine Funktion eines Konfigurationszustands und von Wellenlängenkanälen, aus einer Vielzahl optischer Signale, die empfangen werden von der Vielzahl von WDM-Eingängen des ersten MIMO WSS, und zum Weitergeben des ausgewählten Satzes optischer Signale an den WDM-Ausgang,
einen zweiten wellenlängenselektiven Mehreingangs-/Mehrausgangsschalter, wobei der zweite MIMO WSS umfasst eine Vielzahl von WDM-Eingängen (42), jeder WDM-Eingang zum Empfangen einer Vielzahl optischer Signale, die auf einer Vielzahl von Wellenlängenkanälen befördert werden, wobei der zweite MIMO WSS umfasst eine Vielzahl von WDM-Ausgängen, wobei, für einen WDM-Ausgang, der zweite MIMO WSS ausgelegt ist zum Auswählen eines entsprechenden Satzes optischer Signale, als eine Funktion eines Konfigurationszustands und von Wellenlängenkanälen, aus der Vielzahl optischer Signale, die empfangen werden von der Vielzahl von WDM-Eingängen des zweiten MIMO WSS, und zum Weitergeben des ausgewählten Satzes optischer Signale an den WDM-Ausgang,
eine Vielzahl von optischen Empfängern (7) zum Demodulieren optischer Signale, und eine Vielzahl optischer Koppler (33), jeder optische Koppler einen ersten Kopplereingang aufweisend, der verbunden ist mit einem entsprechenden der WDM-Ausgänge (31) des ersten MIMO WSS und
einen zweiten Kopplereingang, der verbunden ist mit einem entsprechenden der WDM-Ausgänge (32) des zweiten MIMO WSS, und einen Kopplerausgang, der mit einem entsprechenden der optischen Empfänger (7) verbunden ist,
eine Vielzahl von Verteilungskomponenten (10), wobei jede Verteilungskomponente einen Eingang aufweist zum Empfangen eines WDM-Eingangssignals, umfassend eine Vielzahl von optischen Signalen, die auf einem von Wellenlängenkanälen befördert werden, einen Transitausgang und einen Drop-Ausgang, wobei die Verteilungskomponente konfiguriert ist zum Weitergeben der optischen Signale von dem WDM-Eingangssignal zum Transit-Ausgang und zum Drop-Ausgang in einer selektiven oder nicht selektiven Art, wobei, für einen ersten Untersatz der Verteilungskomponenten, der Drop-Ausgang verbunden ist mit einem entsprechenden der WDM-Ausgänge (41) des ersten MIMO WSS und wobei die Verteilungskomponenten des ersten Untersatzes nicht verbunden sind mit dem zweiten MIMO WSS, und für einen zweiten Untersatz der Verteilungskomponenten, der Drop-Ausgang verbunden ist mit einem entsprechenden der WDM-Eingänge (42) des zweiten MIMO WSS, wobei die Verteilungskomponenten des zweiten Untersatzes nicht verbunden sind mit dem ersten MIMO WSS.

2. Multidirektionale optische Vorrichtung nach Anspruch 1, wobei die Verteilungskomponente umfasst einen nicht filternden optischen Splitter.

3. Multidirektionale optische Vorrichtung nach Anspruch 1, wobei die Verteilungskomponente umfasst einen wellenlängenselektiven Schalter, der konfiguriert ist zum Weitergeben eines ersten Untersatzes der optischen Signale des WDM-Eingangssignals zum Transitausgang und zum Befördern eines zweiten Untersatzes der optischen Signale des WDM-Eingangssignals zum Drop-Ausgang, wobei der erste und der zweite Untersatz ausgewählt werden als Funktion von Wellenlängenkanälen.

4. Multidirektionale optische Vorrichtung nach einem beliebigen der Ansprüche 1 bis 3, wobei jede Verteilungskomponente weiterhin umfasst einen zweiten Drop-Ausgang, wobei, für einen dritten Untersatz der Verteilungskomponenten, der zweite Drop-Ausgang verbunden ist mit einem entsprechenden der WDM-Eingänge eines dritten MIMO WSS, für einen vierten Untersatz von Verteilungskomponenten, wobei der zweite Drop-Ausgang verbunden ist mit einem entsprechenden der WDM-Eingänge eines vierten MIMO WSS, wobei der dritte MIMO WSS umfasst eine Vielzahl von WDM-Ausgängen, wobei, für einen WDM-Ausgang, der dritte MIMO WSS ausgelegt ist zum Auswählen eines entsprechenden Satzes optischer Signale, als eine Funktion eines Konfigurationszustands und von Wellenlängenkanälen, aus der Vielzahl optischer Signale, die empfangen werden von der Vielzahl von WDM-Eingängen des dritten MIMO WSS, und zum Weitergeben des ausgewählten Satzes optischer Signale an den WDM-Ausgang, wobei der vierte MIMO WSS umfasst eine Vielzahl von WDM-Ausgängen, wobei für einen WDM-Ausgang, der vierte MIMO WSS ausgelegt ist zum Auswählen eines entsprechenden Satzes von optischen Signalen, als eine Funktion eines Konfigurationszustands und von Wellenlängenkanälen, aus der Vielzahl optischer Signale, die empfangen werden von der Vielzahl von WDM-Eingängen des vierten MIMO WSS, und zum Weitergeben des ausgewählten Satzes optischer Signale an den WDM-Ausgang, wobei die optische Vorrichtung weiterhin umfasst:
eine zweite Vielzahl von optischen Empfängern zum Demodulieren optischer Signale, und eine zweite Vielzahl optischer Koppler, wobei jeder optische Koppler der zweiten Vielzahl einen ersten Kopplereingang aufweist, der verbunden ist mit einem entsprechenden der WDM-Ausgänge des dritten MIMO WSS, und einen zweiten Kopplereingang, der mit einem entsprechenden der WDM-Ausgänge des vierten MIMO WSS verbunden ist, und einen Kopplerausgang, der mit einem entsprechenden der optischen Empfänger der zweiten Vielzahl verbunden ist.

5. Multidirektionale optische Vorrichtung nach einem beliebigen der Ansprüche 1 bis 4, umfassend einen weiteren optischen Empfänger zum Demodulieren von optischen Signalen, wobei ein optischer Koppler weiterhin umfasst einen zweiten Kopplerausgang, der mit dem weiteren optischen Empfänger verbunden ist.

6. Multidirektionale optische Vorrichtung nach einem beliebigen der Ansprüche 1 bis 5, wobei mindestens ein MIMO WSS weiterhin ausgelegt ist für jeden Wellenlängenkanal zum Weitergeben eines ersten optischen Signals, das auf dem Wellenlängenkanal befördert wird, von einem ersten WDM-Eingang zu einem ersten WDM-Ausgang, und eines zweiten optischen Signals, das auf dem Wellenlängenkanal befördert wird, von einem zweiten WDM-Eingang zu einem zweiten WDM-Ausgang.

7. Multidirektionale optische Vorrichtung für ein optisches WDM-Netzwerk (1), wobei die multidirektionale Vorrichtung umfasst:
eine Vielzahl optischer Sender (8) zum Erzeugen einer Vielzahl optischer Signale, die befördert werden auf einer Vielzahl von Wellenlängenkanälen, einen ersten wellenlängenselektiven Mehreingangs-/Mehrausgangsschalter (6), wobei der erste MIMO WSS umfasst eine Vielzahl von WDM-Ausgängen (241) und eine Vielzahl von WDM-Eingängen, einen zweiten wellenlängenselektiven Mehreingangs-/Mehrausgangsschalter, wobei der zweite MIMO WSS umfasst eine Vielzahl von WDM-Ausgängen (242) und eine Vielzahl von WDM-Eingängen, und eine Vielzahl optischer Koppler (533), wobei jeder optische Koppler einen ersten Kopplerausgang aufweist, der verbunden ist mit einem entsprechenden der WDM-Eingänge des ersten MIMO WSS, und einen zweiten Kopplerausgang, der verbunden ist mit einem entsprechenden der WDM-Eingänge des zweiten MIMO WSS, und einen Kopplereingang, der mit einem entsprechenden der optischen Sender (8) verbunden ist, wobei, für einen WDM-Ausgang, der erste MIMO WSS ausgelegt ist zum Auswählen eines entsprechenden Satzes der Vielzahl optischer Signale, als eine Funktion eines Konfigurationszustands und von Wellenlängenkanälen, aus den Vielzahlen optischer Signale, die empfangen werden von der Vielzahl von WDM-Eingängen des ersten MIMO WSS, und zum Weitergeben des ausgewählten Satzes optischer Signale an den WDM-Ausgang, jeder WDM-Ausgang zum Weitergeben des entsprechenden Satzes optischer Signale, die befördert werden von der Vielzahl von Wellenlängenkanälen, und wobei, für einen WDM-Ausgang, der zweite MIMO WSS ausgelegt ist zum Auswählen eines entsprechenden Satzes der Vielzahl optischer Signale, als eine Funktion eines Konfigurationszustands und von Wellenlängenkanälen, aus den Vielzahlen optischer Signale, die empfangen werden von der Vielzahl von WDM-Eingängen des zweiten MIMO WSS, und zum Weitergeben des ausgewählten Satzes optischer Signale an den WDM-Ausgang, jeder WDM-Ausgang zum Weitergeben des entsprechenden Satzes optischer Signale, die befördert werden von der Vielzahl von Wellenlängenkanälen,
eine Vielzahl von Wiedereinschleusungskomponenten (11), jede mit einem Add-Eingang, einen Transit-Eingang und einen Wiedereinschleusungsausgang (16), wobei, für einen ersten Untersatz der Wiedereinschleusungskomponenten, der Add-Eingang verbunden ist mit einem entsprechenden der WDM-Ausgänge des ersten MIMO WSS und wobei die Wiedereinschleusungskomponenten des ersten Untersatzes nicht verbunden sind mit dem zweiten MIMO WSS, für einen zweiten Untersatz der Wiedereinschleusungskomponenten, wobei der Add-Eingang verbunden ist mit einem entsprechenden der WDM-Ausgänge des zweiten MIMO WSS, wobei die Wiedereinschleusungskomponenten des zweiten Untersatzes nicht verbunden sind mit dem ersten MIMO WSS, der entsprechende Wiedereinschleusungsausgang für jede Wiedereinschleusungskomponente zum Weitergeben eines WDM-Ausgangssignals, wobei die Wiedereinschleusungskomponente konfiguriert ist zum Erhalten des WDM-Ausgangssignals durch Wiedereinschleusen optischer Signale, die empfangen werden von dem Add-Eingang und von dem Transiteingang der Wiedereinschleusungskomponente in einer selektiven oder nicht selektiven Weise.

8. Multidirektionale optische Vorrichtung nach Anspruch 7, wobei die Wiedereinschleusungskomponente umfasst einen nicht filternden optischen Kombinator.

9. Multidirektionale optische Vorrichtung nach Anspruch 8, wobei die Wiedereinschleusungskomponente umfasst einen wellenlängenselektiven Schalter, der konfiguriert ist zum Weitergeben an den Wiedereinschleusungsausgang eines ersten Untersatzes der optischen Signale von dem Transiteingang zum Weitergeben des zweiten Untersatzes der optischen Signale von dem Add-Eingang, wobei der erste und der zweite Untersatz ausgewählt werden als Funktion von Wellenlängenkanälen.

10. Multidirektionale optische Vorrichtung nach einem beliebigen der Ansprüche 7-9, wobei jede Wiedereinschleusungskomponente weiterhin umfasst einen zweiten Add-Eingang, wobei die optische Vorrichtung weiterhin umfasst:
eine zweite Vielzahl optischer Sender zum Erzeugen einer zweiten Vielzahl von optischen Signalen, die befördert werden auf Wellenlängenkanälen, und einen dritten MIMO WSS, umfassend eine Vielzahl von WDM-Ausgängen und eine Vielzahl von WDM-Eingängen, und einen vierten MIMO WSS, umfassend eine Vielzahl von WDM-Ausgängen und eine Vielzahl von WDM-Eingängen,
eine zweite Vielzahl optischer Koppler, wobei jeder optische Koppler der zweiten Vielzahl einen Kopplereingang aufweist, der verbunden ist mit einem entsprechenden der optischen Sender der zweiten Vielzahl von Sendern, einen ersten Kopplerausgang, der mit einem entsprechenden der WDM-Eingänge des dritten MIMO WSS verbunden ist, und einen zweiten Kopplerausgang, der mit einem entsprechenden der WDM-Eingänge des vierten MIMO WSS verbunden ist, wobei, für einen dritten Untersatz der Wiedereinspeisungskomponenten, der zweite Add-Eingang verbunden ist mit einem entsprechenden der WDM-Ausgänge des dritten MIMO WSS und, für einen vierten Untersatz der Wiedereinspeisungskomponenten, der zweite Add-Eingang verbunden ist mit einem entsprechenden der WDM-Ausgänge des vierten MIMO WSS,
wobei, für einen WDM-Ausgang, der dritte MIMO WSS ausgelegt ist zum Auswählen eines entsprechenden Satzes der zweiten Vielzahl optischer Signale, als eine Funktion eines Konfigurationszustands und von Wellenlängenkanälen, aus den Vielzahlen erzeugter optischer Signale, die empfangen werden von der Vielzahl von WDM-Eingängen des dritten MIMO WSS, und zum Weitergeben des ausgewählten Satzes optischer Signale an den WDM-Ausgang, wobei, für einen WDM-Ausgang, der vierte MIMO WSS ausgelegt ist zum Auswählen eines entsprechenden Satzes der zweiten Vielzahl von optischen Signalen, als eine Funktion eines Konfigurationszustands und von Wellenlängenkanälen, aus den Vielzahlen erzeugter optischer Signale, die empfangen wurden von der Vielzahl von WDM-Eingängen des vierten MIMO WSS, und zum Weitergeben des ausgewählten Satzes optischer Signale an den WDM-Ausgang.

11. Multidirektionale optische Vorrichtung nach einem beliebigen der Ansprüche 7 bis 10, umfassend einen weiteren optischen Sender zum Erzeugen optischer Signale, wobei ein optischer Koppler weiterhin umfasst einen zweiten Kopplereingang, der verbunden ist mit dem weiteren optischen Sender.

12. Multidirektionale optische Vorrichtung nach einem beliebigen der Ansprüche 7 bis 11, wobei mindestens MIMO WSS weiterhin ausgelegt ist für jeden Wellenlängenkanal zum Weitergeben eines ersten optischen Signals, das auf dem Wellenlängenkanal befördert wird, von einem ersten WDM-Eingang zu einem ersten WDM-Ausgang und eines zweiten optischen Signals, das auf dem Wellenlängenkanal befördert wird, von einem zweiten WDM-Eingang zu einem zweiten WDM-Ausgang.

13. Optisches Schaltgerät, umfassend eine multidirektionale optische Vorrichtung nach einem beliebigen der Ansprüche 1 bis 6 und eine multidirektionale optische Vorrichtung nach einem beliebigen der Ansprüche 7 bis 12, wobei die zwei optischen Vorrichtungen weiterhin umfassen eine Vielzahl von Transitverbindungen, wobei jede Transitverbindung, die einen Transitausgang einer der Verteilungskomponenten, die umfasst sind in der multidirektionalen optischen Vorrichtung, verbindet mit einem Transiteingang einer der Wiedereinspeisungskomponenten, die umfasst sind in der multidirektionalen optischen Vorrichtung.

## Revendications

1. Appareil optique multidirectionnel destiné à un réseau optique WDM, l'appareil optique multidirectionnel comprenant :
un premier commutateur à sélection de longueur d'onde à entrées multiples et sorties multiples (6), le premier WSS MIMO comprenant une pluralité d'entrées WDM (41), chaque entrée WDM étant destinée à recevoir une pluralité de signaux optiques transportés sur une pluralité de canaux de longueur d'onde, le premier WSS MIMO comprenant une pluralité de sorties WDM, dans lequel, pour une sortie WDM, le premier WSS MIMO est adapté pour sélectionner un ensemble respectif de signaux optiques, en fonction d'un état de configuration et de canaux de longueur d'onde, parmi la pluralité de signaux optiques reçus par la pluralité d'entrées WDM du premier WSS MIMO, et pour transmettre l'ensemble sélectionné de signaux optiques vers la sortie WDM,
un deuxième commutateur à sélection de longueur d'onde à entrées multiples et sorties multiples, le deuxième WSS MIMO comprenant une pluralité d'entrées WDM (42), chaque entrée WDM étant destinée à recevoir une pluralité de signaux optiques transportés sur une pluralité de canaux de longueur d'onde, le deuxième WSS MIMO comprenant une pluralité de sorties WDM, dans lequel, pour une sortie WDM, le deuxième WSS MIMO est adapté pour sélectionner un ensemble respectif de signaux optiques, en fonction d'un état de configuration et de canaux de longueur d'onde, parmi la pluralité de signaux optiques reçus par la pluralité d'entrées WDM du deuxième WSS MIMO, et pour transmettre l'ensemble sélectionné de signaux optiques vers la sortie WDM,
une pluralité de récepteurs optiques (7) destinés à démoduler les signaux optiques, et une pluralité de coupleurs optiques (33), chaque coupleur optique ayant une première entrée de coupleur connectée à une sortie WDM respective parmi les sorties WDM (31) du premier WSS MIMO et une deuxième entrée de coupleur connectée à une sortie WDM respective parmi les sorties WDM (32) du deuxième WSS MIMO et une sortie de coupleur connectée à un récepteur optique respectif parmi les récepteurs optiques (7),
une pluralité de composants de distribution (10), chaque composant de distribution ayant une entrée destinée à recevoir un signal d'entrée WDM comprenant une pluralité de signaux optiques transportés sur une pluralité de canaux de longueur d'onde, une sortie de transit et une sortie d'extraction, dans lequel le composant de distribution est configuré pour transmettre les signaux optiques du signal d'entrée WDM vers la sortie de transit et vers la sortie d'extraction d'une manière sélective ou non sélective, dans lequel, pour un premier sous-ensemble des composants de distribution, la sortie d'extraction est connectée à une entrée WDM respective parmi les entrées WDM (41) du premier WSS MIMO et dans lequel les composants de distribution du premier sous-ensemble ne sont pas connectés au deuxième WSS MIMO, et pour un deuxième sous-ensemble des composants de distribution, la sortie d'extraction est connectée à une entrée WDM respective parmi les entrées WDM (42) du deuxième WSS MIMO, dans lequel les composants de distribution du deuxième sous-ensemble ne sont pas connectés au premier WSS MIMO.

2. Appareil optique multidirectionnel selon la revendication 1, dans lequel le composant de distribution comprend un diviseur optique non filtrant.

3. Appareil optique multidirectionnel selon la revendication 1, dans lequel le composant de distribution comprend un commutateur à sélection de longueur d'onde configuré pour transmettre un premier sous-ensemble des signaux optiques du signal d'entrée WDM vers la sortie de transit et pour transmettre un deuxième sous-ensemble des signaux optiques du signal d'entrée WDM vers la sortie d'extraction, dans lequel le premier et le deuxième sous-ensembles sont sélectionnés en fonction de canaux de longueur d'onde.

4. Appareil optique multidirectionnel selon l'une quelconque des revendications 1 à 3, dans lequel chaque composant de distribution comprend en outre une deuxième sortie d'extraction, dans lequel, pour un troisième sous-ensemble des composants de distribution, la deuxième sortie d'extraction est connectée à une entrée WDM respective parmi les entrées WDM d'un troisième WSS MIMO et, pour un quatrième sous-ensemble des composants de distribution, la deuxième sortie d'extraction est connectée à une entrée WDM respective parmi les entrées WDM d'un quatrième WSS MIMO, dans lequel le troisième WSS MIMO comprend une pluralité de sorties WDM, dans lequel, pour une sortie WDM, le troisième WSS MIMO est adapté pour sélectionner un ensemble respectif de signaux optiques, en fonction d'un état de configuration et de canaux de longueur d'onde, parmi la pluralité de signaux optiques reçus par la pluralité d'entrées WDM du troisième WSS MIMO, et pour transmettre l'ensemble sélectionné de signaux optiques vers la sortie WDM, dans lequel le quatrième WSS MIMO comprend une pluralité de sorties WDM, dans lequel pour une sortie WDM, le quatrième WSS MIMO est adapté pour sélectionner un ensemble respectif de signaux optiques, en fonction d'un état de configuration et de canaux de longueur d'onde, parmi la pluralité de signaux optiques reçus par la pluralité d'entrées WDM du quatrième WSS MIMO, et pour transmettre l'ensemble sélectionné de signaux optiques vers la sortie WDM, l'appareil optique comprenant en outre :
une deuxième pluralité de récepteurs optiques destinés à démoduler les signaux optiques, et une deuxième pluralité de coupleurs optiques, chaque coupleur optique de la deuxième pluralité ayant une première entrée de coupleur connectée à une sortie WDM respective parmi les sorties WDM du troisième WSS MIMO et une deuxième entrée de coupleur connectée à une sortie WDM respective parmi les sorties WDM du quatrième WSS MIMO et une sortie de coupleur connectée à un récepteur optique respectif de la deuxième pluralité de récepteurs optiques.

5. Appareil optique multidirectionnel selon l'une quelconque des revendications 1 à 4, comprenant un récepteur optique supplémentaire destiné à démoduler les signaux optiques, dans lequel un coupleur optique comprend en outre une deuxième sortie de coupleur connectée au récepteur optique supplémentaire.

6. Appareil optique multidirectionnel selon l'une quelconque des revendications 1 à 5, dans lequel au moins un WSS MIMO est en outre adapté pour chaque canal de longueur d'onde, pour transmettre un premier signal optique transporté sur le canal de longueur d'onde d'une première entrée WDM vers une première sortie WDM et un deuxième signal optique transporté sur le canal de longueur d'onde d'une deuxième entrée WDM vers une deuxième sortie WDM.

7. Appareil optique multidirectionnel destiné à un réseau optique WDM (1), l'appareil optique multidirectionnel comprenant :
une pluralité d'émetteurs optiques (8) destinés à générer une pluralité de signaux optiques transportés sur une pluralité de canaux de longueur d'onde, un premier commutateur à sélection de longueur d'onde à entrées multiples et sorties multiples (6), le premier WSS MIMO comprenant une pluralité de sorties WDM (241) et une pluralité d'entrées WDM, un deuxième commutateur à sélection de longueur d'onde à entrées multiples et sorties multiples, le deuxième WSS MIMO comprenant une pluralité de sorties WDM (242) et une pluralité d'entrées WDM, et une pluralité de coupleurs optiques (533), chaque coupleur optique ayant une première sortie de coupleur connectée à une entrée WDM respective parmi les entrées WDM du premier WSS MIMO et une deuxième sortie de coupleur connectée à une entrée WDM respective parmi les entrées WDM du deuxième WSS MIMO et une entrée de coupleur connectée à un émetteur optique respectif parmi les émetteurs optiques (8), dans lequel, pour une sortie WDM, le premier WSS MIMO est adapté pour sélectionner un ensemble respectif de la pluralité de signaux optiques, en fonction d'un état de configuration et de canaux de longueur d'onde, parmi les pluralités de signaux optiques reçus par la pluralité d'entrées WDM du premier WSS MIMO, et pour transmettre l'ensemble sélectionné de signaux optiques vers la sortie WDM, chaque sortie WDM étant destinée à transmettre l'ensemble respectif de signaux optiques transportés sur la pluralité de canaux de longueur d'onde, et dans lequel, pour une sortie WDM, le deuxième WSS MIMO est adapté pour sélectionner un ensemble respectif de la pluralité de signaux optiques, en fonction d'un état de configuration et de canaux optiques, parmi les pluralités de signaux optiques reçus par la pluralité d'entrées WDM du deuxième WSS MIMO, et pour transmettre l'ensemble sélectionné de signaux optiques vers la sortie WDM, chaque sortie WDM étant destinée à transmettre l'ensemble respectif des signaux optiques transportés sur la pluralité de canaux de longueur d'onde,
une pluralité de composants de multiplexage (11), chacun ayant une entrée d'insertion, une entrée de transit et une sortie de multiplexage (16), dans lequel, pour un premier sous-ensemble des composants de multiplexage, l'entrée d'insertion est connectée à une sortie WDM respective parmi les sorties WDM du premier WSS MIMO et dans lequel les composants de multiplexage du premier sous-ensemble ne sont pas connectés au deuxième WSS MIMO, pour un deuxième sous-ensemble des composants de multiplexage, l'entrée d'insertion est connectée à une sortie WDM respective parmi les sorties WDM du deuxième WSS MIMO, dans lequel les composants de multiplexage du deuxième sous-ensemble ne sont pas connectés au premier WSS MIMO, la sortie de multiplexage respective de chaque composant de multiplexage étant destiné à transmettre un signal de sortie WDM, dans lequel le composant de multiplexage est configuré pour obtenir le signal de sortie WDM en multiplexant les signaux optiques reçus de l'entrée d'insertion et de l'entrée de transit du composant de multiplexage d'une manière sélective ou non sélective.

8. Appareil optique multidirectionnel selon la revendication 7, dans lequel le composant de multiplexage comprend un combineur optique non-filtrant.

9. Appareil optique multidirectionnel selon la revendication 8, dans lequel le composant de multiplexage comprend un commutateur à sélection de longueur d'onde configuré pour transmettre vers la sortie de multiplexage un premier sous-ensemble des signaux optiques provenant de l'entrée de transit et pour transmettre un deuxième sous-ensemble des signaux optiques provenant de l'entrée d'insertion, dans lequel les premier et deuxième sous-ensembles sont sélectionnés en fonction de canaux de longueur d'onde.

10. Appareil optique multidirectionnel selon l'une quelconque des revendications 7 à 9, dans lequel chaque composant de multiplexage comprend en outre une deuxième entrée d'insertion, l'appareil optique comprenant en outre :
une deuxième pluralité d'émetteurs optiques destinés à générer une deuxième pluralité de signaux optiques transportés sur des canaux de longueur d'onde, et un troisième WSS MIMO comprenant une pluralité de sorties WDM et une pluralité d'entrées WDM, et un quatrième WSS MIMO comprenant une pluralité de sorties WDM et une pluralité d'entrées WDM,
une deuxième pluralité de coupleurs optiques, chaque coupleur optique de la deuxième pluralité ayant une entrée de coupleur connectée à un émetteur optique respectif parmi les émetteurs optiques de le deuxième pluralité d'émetteurs, une première sortie de coupleur connectée à une entrée WDM respective parmi les entrées WDM du troisième WSS MIMO et une deuxième sortie de coupleur connectée à une entrée WDM respective parmi les entrées WDM du quatrième WSS MIMO,
dans lequel, pour un troisième sous-ensemble des composants de multiplexage, la deuxième entrée d'insertion est connectée à une sortie WDM respective parmi les sorties WDM du troisième WSS MIMO et, pour un quatrième sous-ensemble des composants de multiplexage, la deuxième entrée d'insertion est connectée à une sortie WDM respective parmi les sorties WDM du quatrième WSS MIMO, dans lequel, pour une sortie WDM, le troisième WSS MIMO est adapté pour sélectionner un ensemble respectif de la deuxième pluralité de signaux optiques, en fonction d'un état de configuration et de canaux de longueur d'onde, parmi les pluralités de signaux optiques générés reçus par la pluralité d'entrées WDM du troisième WSS MIMO, et pour transmettre l'ensemble sélectionné de signaux optiques vers la sortie WDM, dans lequel, pour une sortie WDM, le quatrième WSS MIMO est adapté pour sélectionner un ensemble respectif de la deuxième pluralité de signaux optiques, en fonction d'un état de configuration et de canaux de longueur d'onde, parmi les pluralités de signaux optiques générés reçus par la pluralité d'entrées WDM du quatrième WSS MIMO, et pour transmettre l'ensemble sélectionné de signaux optiques vers la sortie WDM.

11. Appareil optique multidirectionnel selon l'une quelconque des revendications 7 à 10, comprenant un émetteur optique supplémentaire destiné à générer les signaux optiques, dans lequel un coupleur optique comprend en outre une deuxième entrée de coupleur connectée à l'émetteur optique supplémentaire.

12. Appareil optique multidirectionnel selon l'une quelconque des revendications 7 à 11, dans lequel au moins un WSS MIMO est en outre adapté pour chaque canal de longueur d'onde, pour transmettre un premier signal optique transporté sur le canal de longueur d'onde d'une première entrée WDM vers une première sortie WDM et un deuxième signal optique transporté sur le canal de longueur d'onde d'une deuxième entrée WDM vers une deuxième sortie WDM.

13. Dispositif de commutation optique comprenant un appareil optique multidirectionnel selon l'une des revendications 1 à 6 et un appareil optique multidirectionnel selon l'une des revendications 7 à 12, les deux appareils optiques comprenant en outre une pluralité de liaisons de transit, chaque liaison de transit connectant une sortie de transit à l'un des composants de distribution compris dans l'appareil optique multidirectionnel à une entrée de transit de l'un des composants de multiplexage compris dans l'appareil optique multidirectionnel.
